# EUROPÄISCHE PATENTSCHRIFT

(11) **EP 0 515 794 B1**
(45) Veröffentlichungstag und Bekanntmachung des Hinweises auf die Patenterteilung: **06.07.1994**
(21) Anmeldenummer: 92105258.5
(22) Anmeldetag: 27.03.1992
(51) Int. Cl.: F16B 13/06, F16B 13/10

(54) **Spreizdübel aus Kunststoff**
Expansible dowel made of plastic
Cheville expansible en matérial plastique

(30) Priorität: 29.05.1991 DE 4117503
(43) Veröffentlichungstag der Anmeldung: 02.12.1992
(73) Patentinhaber: fischerwerke Artur Fischer GmbH & Co. KG, D-72178 Waldachtal (DE)
(72) Erfinder: Fischer, Artur, Prof. Dr. h. c., W-7244 Waldachtal/3 Tumlingen (DE)

(56) Entgegenhaltungen:
- AT-B- 285 907
- DE-C- 1 097 117

## Beschreibung

Die Erfindung betrifft einen Spreizdübel aus Kunststoff mit einem über einen Teil seiner Länge verlaufenden Schlitz und einer Längsbohrung zum Einführen einer Befestigungsschraube oder dgl. gemäß der Gattung des Anspruches 1.

Aus der DE-PS 1 097 117 ist ein über einen Teil seiner Länge geschlitzter, zylinderförmiger Spreizdübel aus Kunststoff bekannt, dessen hinteres Ende eine Längsbohrung zum Einführen einer Befestigungsschraube aufweist. Der erste Abschnitt dieser Längsbohrung ist zylindrisch ausgebildet und weist einen etwa dem Außendurchmesser der Befestigungsschraube entsprechenden Durchmesser auf. An diesen zylindrischen Abschnitt schließt sich eine konische Verjüngung an, die in dem im vorderen Bereich als Aufspaltung ausgebildeten Schlitz des Dübels ausläuft. Durch die konische Verjüngung der Längsbohrung des Dübels ergibt sich eine kreisförmige Querschnittsverengung, die beim Eindrehen der Befestigungsschraube einen hohen Einschraubwiderstand verursacht. Die durch den Längsschlitz gebildeten Spreizsegmente des Dübels können zwar rechtwinklig zur Schlitzebene zur Verminderung des Einschraubwiderstandes nachgeben, in Schlitzebene muß jedoch das Gewinde der Befestigungsschraube voll in das Dübelmaterial eingeschnitten werden. Da in der Schlitzebene keine Aufspreizung des Dübels erfolgen kann, wird dieser erhöhte Einschraubwiderstand nicht in entsprechende Spreizkraft umgesetzt. Aufgrund des erhöhten Einschraubwiderstandes ist es insbesondere bei zu groß ausgefallenen Bohrlöchern möglich, daß der Dübel trotz am Außenumfang angeordneter Drehsicherungsrippen beim Eindrehen der Befestigungsschraube mitdreht.

Der Erfindung liegt die Aufgabe zugrunde, den Spreizdübel der eingangs erwähnten Gattung derart zu verbessern, daß ohne Verlust für den Haltewert der Einschraubwiderstand verringert und das Mitdrehen des Dübels beim Eindrehen der Befestigungsschraube verhindert wird.

Die Lösung dieser Aufgabe wird durch die im Anspruch 1 angegebenen Merkmale erreicht. Da die Verengung der Längsbohrung nur in einer Ebene erfolgt und somit der Durchmesser des zylindrischen Abschnittes der Längsbohrung in Schlitzebene erhalten bleibt, muß sich das Gewinde der Befestigungsschraube nur in die beiden sich gegenüberliegenden Wandungsflächen der Verengung einschneiden. Daraus resultiert eine Reduzierung des Eindrehwiderstandes ohne Verlust an Haltekraft für den Dübel. Durch den sich bis zu dem zylindrischen Abschnitt der Längsbohrung erstreckenden Schlitz können die beiden Spreizsegmente bereits im Bereich der Verengung aufklappen, so daß der sich daraus ergebende Einschraubwiderstand unmittelbar in Spreizkraft umgesetzt wird. Die beginnende Verspreizung des Dübels an dieser Stelle unterstützt die Verdrehsicherung. Somit wird wegen des reduzierten Eindrehwiderstandes die Drehsicherung des Dübels verbessert.

Um das Einschneiden der Befestigungsschraube in den Dübel zu erleichtern, weist die Längsbohrung achsparallel verlaufende und sich auf die Verengung erstreckende Rippen auf. Optimale Verhältnisse und insbesondere eine ausreichende Führung der Befestigungsschraube wird erreicht, wenn der zylindrische Abschnitt der Längsbohrung, sowie die Verengung und die Aufspaltung sich jeweils über ein Drittel der Länge des Dübels erstrecken. Dabei ist es zweckmäßig, daß der vom vorderen Ende des Dübels ausgehende Schlitz etwa bis zum zylindrischen Abschnitt der Längsbohrung verläuft.

In der Zeichnung ist ein Ausführungsbeispiel der Erfindung dargestellt.

Es zeigen:

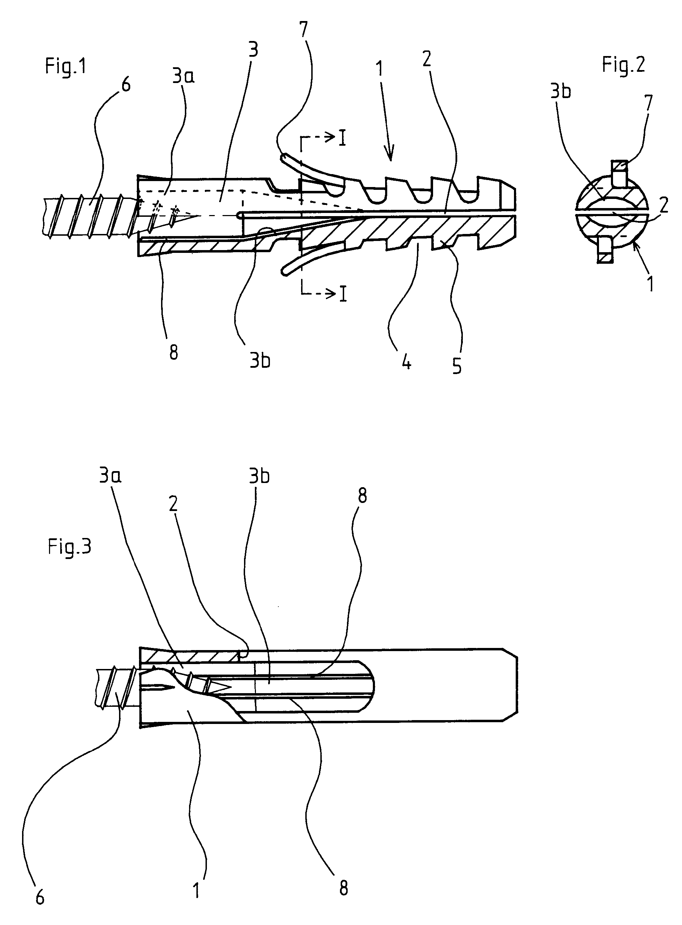

- Figur 1: einen Spreizdübel im Teillängsschnitt,
- Figur 2: den Spreizdübel nach Figur 1 im Querschnitt gemäß der Schnittlinie I-I und
- Figur 3: eine Draufsicht auf die Schlitzebene des Spreizdübels nach Figur 1.

Der Spreizdübel 1 ist in Längsrichtung mit einem vom vorderen Ende ausgehenden Schlitz 2 versehen, der bis zum zylindrischen Abschnitt 3a der Längsbohrung 3 reicht. Die zylinderförmige Außenfläche des Dübels 1 ist mit mehreren Einkerbungen 4 versehen. Dadurch entstehen Zähne 5, die sich beim Aufspreizen des Dübels in weiches Material eingraben und in harten Baustoffen durch plastische Verformung entsprechende Reibungskraft an der Bohrlochwand erzeugen.

An den zylindrischen Abschnitt 3a der Längsbohrung 3 des Dübels schließt sich eine Verengung 3b an, die in dem im vorderen Bereich eine Aufspaltung bildenden Schlitz 2 ausläuft. Die Verengung erfolgt nur rechtwinklig zur Schlitzebene, so daß in Schlitzebene der Durchmesser des zylindrischen Abschnittes 3a der Längsbohrung 3 erhalten bleibt. Der Durchmesser des zylindrischen Abschnittes 3a entspricht etwa dem Außendurchmesser der Befestigungsschraube 6. Beim Eindrehen der Befestigungsschraube wird diese zunächst im zylindrischen Abschnitt 3a der Längsbohrung 3 geführt. Mit dem Eindringen in die Verengung 3b beginnt die Aufspreizung des Spreizdübels. Die maximale Spreizkraft wird beim Einschrauben der Befestigungsschraube 6 in die im vorderen Bereich durch den Schlitz 2 gebildete Aufspaltung erreicht. Zur Sicherung des Dübels 1 gegen Mitdrehen sind an dessen Außenumfang zwei abstehende Sperrzungen 7 angeordnet.

Zum leichteren Einschneiden der Befestigungsschraube 6 weist die Längsbohrung 3 des Spreizdübels 1 Längsrippen 8 auf, die sich über den zylindrischen Abschnitt 3a und die gesamte Länge der Verengung 3b erstrecken.

## Patentansprüche

1. Spreizdübel aus Kunststoff mit einem vom vorderen Ende ausgehenden und über einen Teil seiner Länge verlaufenden Schlitz, der im vorderen Bereich als Aufspaltung ausgebildet ist, und einer vom hinteren Ende des Dübels ausgehenden Längsbohrung zum Einführen einer Befestigungsschraube oder dgl., die nach einem zylindrischen, etwa dem Außendurchmesser der Schraube entsprechenden Abschnitt in eine in der Aufspaltung auslaufenden Verengung übergeht, **dadurch gekennzeichnet,** daß sich der zylindrische Abschnitt (3a) der Längsbohrung (3) rechtwinklig zur Schlitzebene bis auf die Schlitzweite verengt, und daß in Schlitzebene der Durchmesser des zylindrischen Abschnittes (3a) im Bereich der Verengung (3b) annähernd erhalten bleibt.

2. Spreizdübel nach Anspruch 1, **dadurch gekennzeichnet,** daß die Längsbohrung (3) des Dübels achsparallel verlaufende und sich auf die Verengung (3b) erstrekkende Rippen (8) aufweist.

3. Spreizdübel nach Anspruch 1, **dadurch gekennzeichnet,** daß der zylindrische Abschnitt (3a) der Längsbohrung (3), die Verengung (3b) und die Aufspaltung sich jeweils über ein Drittel der Länge des Dübels erstrecken.

4. Spreizdübel nach Anspruch 1, **dadurch gekennzeichnet,** daß der vom vorderen Ende des Dübels ausgehende Schlitz (2) sich bis zum zylindrischen Abschnitt (3a) der Längsbohrung (3) erstreckt.

## Claims

1. Expansible plastics fixing plug having a slot starting from its front end and extending for a part of its length, which slot in the front region is in the form of a cleft, and having a longitudinal bore starting from the rear end of the fixing plug for the insertion of a fixing screw or similar means, which bore, following a cylindrical portion corresponding approximately to the outer diameter of the screw, narrows, and this narrowing terminates in the cleft, characterized in that the cylindrical portion (3a) of the longitudinal bore (3) narrows to the slot width at right angles to the plane of the slot, and in the plane of the slot the diameter of the cylindrical portion (3a) is approximately preserved in the region of the narrowing (3b).

2. An expansible fixing plug according to claim 1, characterized in that the longitudinal bore (3) of the fixing plug has ribs (8) running parallel with the axis and extending as far as the narrowing (3b).

3. An expansible fixing plug according to claim 1, characterized in that the cylindrical portion (3a) of the longitudinal bore (3), the narrowing (3b) and the cleft each extend for a third of the length of the fixing plug.

4. An expansible fixing plug according to claim 1, characterized in that the slot (2) that starts from the front end of the fixing plug extends as far as the cylindrical portion (3a) of the longitudinal bore (3).

## Revendications

1. Cheville à expansion en matière plastique, possédant une fente qui part de l'extrémité avant, s'étend sur une partie de la longueur de la cheville et est réalisée dans la zone avant comme une ouverture de fendage, ainsi qu'un perçage longitudinal partant de l'extrémité arrière de la cheville, servant à introduire une vis de fixation ou analogue et se raccordant; à la suite d'un segment cylindrique correspondant à peu près au diamètre extérieur de la vis, à un rétrécissement qui se termine dans l'ouverture de fendage, caractérisée en ce que le segment cylindrique (3a) du perçage longitudinal (3) se rétrécit perpendiculairement au plan de la fente, jusqu'à la largeur de la fente, et que, dans le plan de la fente, le diamètre du segment cylindrique (3a) est maintenu approximativement dans la zone du rétrécissement (3b).

2. Cheville à expansion selon la revendication 1, caractérisée en ce que le perçage longitudinal (3) de la cheville présente des nervures (8) orientées parallèlement à l'axe et s'étendant sur le rétrécissement (3b).

3. Cheville à expansion selon la revendication 1, caractérisée en ce que le segment cylindrique (3a) du perçage longitudinal (3), le rétrécissement (3b) et l'ouverture de fendage s'étendent chacun sur un tiers de la longueur de la cheville.

4. Cheville à expansion selon la revendication 1, caractérisée en ce que la fente (2), partant de l'extrémité avant de la cheville, s'étend jusqu'au segment cylindrique (3a) du perçage longitudinal (3).
